# EUROPÄISCHE PATENTANMELDUNG

(11) **EP 4 789 785 A1**
(43) Veröffentlichungstag der Anmeldung: **12.08.2026**
(21) Anmeldenummer: 25156536.2
(22) Anmeldetag: 07.02.2025
(51) Int. Cl.: B08B 15/04, B23Q 11/00

(54) **VORRICHTUNG UND VERFAHREN ZUM ABTRENNEN UND FRAKTIONIEREN VON MATERIALIEN VON BAUSTOFFEN, DIE MEHRERE SCHICHTEN UNTERSCHIEDLICHER MATERIALIEN AUFWEISEN**

(71) Anmelder: Ehringfeld, Johann, 67160 Riedseltz (FR)
(72) Erfinder: EHRINGFELD, Johann, 67160 Riedseltz (FR)
(74) Vertreter: mepat Patentanwälte

(57) **Zusammenfassung**

Die vorliegende Erfindung stellt eine Vorrichtung (1) und ein Verfahren zum Abtrennen und Fraktionieren von Materialien von Baustoffen bereit, die mehrere Schichten unterschiedlicher Materialien aufweisen. Die Vorrichtung (1) weist eine Fräsvorrichtung (10) mit verstellbarer Frästiefe, eine Auffangvorrichtung (3), eine Saugvorrichtung (4) und eine Mehrzahl flexibler Röhrenelemente (5) auf, durch die die Fräsvorrichtung (10) mit der Auffangvorrichtung (3) und der Saugvorrichtung (4) verbunden ist. Ferner weist die Vorrichtung (1) zumindest eine weitere Auffangvorrichtung (3) und eine Materialweiche (2) mit einem Einlass (21) und zumindest zwei Auslässen (22) auf, wobei der Einlass (21) mit der Fräsvorrichtung (10) über ein Röhrenelement (5) verbunden ist und durch ein Schwenkelement (23) selektiv mit jeweils einem der Auslässe (22) in Verbindung bringbar ist. Dabei ist jeder Auslass (22) über jeweils ein Röhrenelement (5) mit jeweils einer der zumindest zwei Auffangvorrichtungen (3) verbunden, und jede Auffangvorrichtung (3) ist über ein Röhrenelement (5) mit der Saugvorrichtung (4) verbunden.

## Beschreibung

Die Erfindung betrifft eine Vorrichtung und ein Verfahren zum Abtrennen und Fraktionieren von Materialien von Baustoffen, die mehrere Schichten unterschiedlicher Materialien aufweisen.

Aus dem Stand der Technik ist bekannt, im Baubereich, z. B. bei der Sanierung von Altbauten, zum Entfernen von beispielsweise Verputz, Fliesenkleber, Spachtelmasse oder Farbe ("Schicht") von einem Boden, einer Wand oder Decke ("Oberfläche"), die aus einem Baustoff wie beispielsweise Beton, Stein oder Holz bestehen, Fräsvorrichtungen einzusetzen.

Dabei kann die Fräse mittels einer Führungsvorrichtung beweglich an einem fahrbaren Träger montiert sein, um die von einem Bediener geführte Bewegung der Fräse entlang der abzutragenden Schicht des Materials von der Oberfläche zu erleichtern. Je nach Größe der Fräse kann diese alternativ auch rein manuell bedient werden, d. h., dass ein Bediener die Fräse ohne Träger und Führungsvorrichtung über die zu bearbeitende Fläche führt, um eine Materialschicht abzutragen.

Dabei wird mit den Zähnen einer rotierenden Fräswalze bahnweise eine Materialschicht definierter Dicke abgetragen, wobei das abgefräste Material bzw. die Materialpartikel abgesaugt werden können. Um die Freisetzung in die Umgebung zu vermeiden, kann das Material bzw. können die Materialpartikel dann in einem Behältnis aufgefangen werden, was insbesondere wichtig ist, wenn die abzutragende Materialschicht Schadstoffe wie z. B. Asbest oder Blei enthält.

So zeigt FR 2 913 627 A1 beispielsweise eine Fräsvorrichtung, die über ein Röhrenelement mit einer Filter- und Absackvorrichtung verbunden ist, die wiederrum über ein weiteres Röhrenelement mit einer Saugvorrichtung verbunden ist. Ferner ist dort eine Vorrichtung mit zwei Fräsvorrichtungen gezeigt. Eine Fräsvorrichtung ist an einem Wandträger zur Abtragung einer Materialschicht von einer Wand und die andere Fräsvorrichtung ist an einem Deckenträger zur Abtragung einer Materialschicht von einer Decke angeordnet. Die Röhrenelementen beider Fräsvorrichtungen münden gemeinsam in die Filter- und Absackvorrichtung.

Eine weitere Fräsvorrichtung zum Bearbeiten einer Wand oder Decke ist beispielsweise aus DE 10 2011 003 010 A1 bekannt. Dort ist das Walzengehäuse, in dem die Fräswalze aufgenommen ist, über einen Schlauch mit einem Auffangbehälter verbunden, der Bestandteil eines Staubsaugers sein kann. Die Frästiefe ist einstellbar, sodass die Vorrichtung variabel eingesetzt und Beläge unterschiedlicher Dicke oder mehrschichtige Beläge abgetragen werden können.

Eine Trennung der abgetragenen Beschichtungsmaterialien findet bislang nicht statt, sodass diese gemeinsam entsorgt werden müssen.

Ausgehend von diesem Stand der Technik ist es Aufgabe der vorliegenden Erfindung, eine verbesserte Vorrichtung zum Abtrennen und Fraktionieren von Materialien von Baustoffen, die mehrere Schichten unterschiedlicher Materialien aufweisen, zu schaffen.

Diese Aufgabe wird durch eine Vorrichtung mit den Merkmalen des Anspruchs 1 gelöst.

Eine weitere Aufgabe der vorliegenden Erfindung besteht entsprechend darin, ein Verfahren zum Abtrennen und Fraktionieren von Materialien von Baustoffen, die mehrere Schichten unterschiedlicher Materialien aufweisen, zu schaffen.

Diese Aufgabe wird durch das Verfahren mit den Merkmalen des unabhängigen Anspruchs 8 gelöst.

Weiterbildungen der Vorrichtung und des Verfahrens sind in den jeweiligen Unteransprüchen ausgeführt.

Die erfindungsgemäße Vorrichtung zum Abtrennen und Fraktionieren von Materialien von Baustoffen, die mehrere Schichten unterschiedlicher Materialien aufweisen, umfasst eine Fräsvorrichtung mit verstellbarer Frästiefe, eine Auffangvorrichtung, eine Saugvorrichtung und eine Mehrzahl flexibler Röhrenelemente, durch die die Fräsvorrichtung mit der Auffangvorrichtung und der Saugvorrichtung verbunden ist. Erfindungsgemäß weist die Vorrichtung zumindest eine weitere Auffangvorrichtung und eine Materialweiche mit einem Einlass und mit zumindest zwei Auslässen auf. Der Einlass der Materialweiche ist über ein Röhrenelement mit der Fräsvorrichtung verbunden und kann durch ein Schwenkelement selektiv mit jeweils einem der Auslässe in Verbindung gebracht werden. Jeder Auslass ist über jeweils ein Röhrenelement mit jeweils einer der zumindest zwei Auffangvorrichtungen verbunden, wobei jede Auffangvorrichtung über ein Röhrenelement mit der Saugvorrichtung verbunden ist.

Damit kann je nach Weichenstellung der Materialweiche, die zwischen der Fräsvorrichtung und den Auffangvorrichtungen angeordnet ist, das durch die Fräsvorrichtung abgetragene Material in eine bestimmte Auffangvorrichtung gelenkt werden. Damit lassen sich mehrere Schichten unterschiedlicher Materialien, die auf einem Baustoff vorliegen, gezielt nacheinander abfräsen und durch entsprechendes Umschalten der Materialweiche jeweils getrennt auffangen, ohne dass eine Umrüstung der Vorrichtung erforderlich ist.

"Materialien von Baustoffen, die mehrere Schichten unterschiedlicher Materialien aufweisen" meint hier mehrschichtige Materialien, die auf einer Baustoffoberfläche vorliegen, beispielsweise als Baustoff eine Wand, auf der als mehrschichtige Materialien beispielsweise ein Putz aufgebracht ist, der wiederum eine Tapete trägt, die mit einer Wandfarbe gestrichen ist. Der Baustoff Wand trägt dann an seiner Oberfläche ("Baustoffoberfläche") drei Materialschichten, die mit der erfindungsgemäßen Vorrichtung quasi "sortenrein" abgetrennt werden können. Per Definition wäre dann hier die "Fraktionierung" die Auftrennung in Farbe/Farbpartikel, in Tapetenmaterial und in das Putzmaterial. Es ist also nicht die Auftrennung in Korngrößen, sondern in Materialsorten gemeint, wenn "fraktionieren" verwendet wird. Dieses Verständnis ist auf Fußböden, Decken etc. zu übertragen.

Durch den Einsatz der erfindungsgemäßen Vorrichtung lassen sich Sekundärrohstoffe gewinnen, um wieder in den Stoffstromkreis eingebracht zu werden, und Entsorgungskosten lassen sich durch Vermeidung von Mischabfällen und Störstoffen im Recyclingkreislauf reduzieren. Dabei wird eine Verbesserung der Recyclingquote und eine Entlastung der Deponien erreicht. Dadurch, dass die Notwenigkeit von Umrüstungen entfällt, und die Auffangvorrichtungen sowie die Saugvorrichtung mit entsprechenden Filtern ausgestattet werden können, kann die Einhaltung aller Grenzwerte in Bezug auf A- und E- Stäube, Gebäudeschadstoffe und Unterschreitung einer Asbestfaserkonzentration von 10.000F/m³ gesichert werden.

Erfindungsgemäß kann die Vorrichtung in Abhängigkeit der Anzahl und Art der Materiallagen der abzutragenden Beschichtungen, skaliert werden. Für zwei selektiv aufzufangende Materialfraktionen reichen zwei Auffangvorrichtungen aus, die an jeweils einen Auslass einer Materialweiche angeschlossen sind, die entsprechend zwei Auslässe aufweisen muss. Falls drei Materialfraktionen getrennt in jeweils einer Auffangvorrichtung erhalten werden sollen, wird eine Materialweiche mit drei Auslässen gewählt, bei vier zu trennenden Materialfraktionen entsprechend vier Auffangvorrichtungen und Weichenauslässe etc.

Materialweichen mit mehreren Auslässen können erfindungsgemäß auch zur Abtrennung von weniger Fraktionen verwendet, als Auslässe vorhanden sind - dann bleiben ein oder mehrere Auslässe ungenutzt.

Nach einer bevorzugten Ausführungsform der erfindungsgemäßen Vorrichtung ist die Frästiefe der Fräsvorrichtung zur exakten Anpassung an die abzufräsenden Materialschicht stufenlos und/oder elektronisch einstellbar.

Ferner kann die Materialweiche nach einer weiteren Ausführungsform zum Umschalten des Schwenkelements zwischen den zumindest zwei Auslässen eine manuelle und/oder elektronisch steuerbare Stellvorrichtung aufweisen.

Manuell einstellbare Varianten der Fräsvorrichtung und der Materialweiche sind kostengünstiger. Mit einer elektronischen Stellvorrichtung zur Steuerung der Frästiefe und/oder des Schwenkelements wird eine präzise Betätigung sichergestellt und ferner eine Automatisierung oder Teilautomatisierung der erfindungsgemäßen Vorrichtung möglich, die auch zur Vermeidung von Fehlbedienungen vorteilhaft ist.

Nach einer weiteren Ausführungsform der erfindungsgemäßen Vorrichtung wird die Saugvorrichtung durch eine gemeinsame Saugzentrale oder durch zumindest zwei Einzelsaugvorrichtungen gebildet, mit denen die zwei oder mehr Auffangvorrichtungen über das jeweilige Röhrenelement verbunden sind. Die Verwendung einer gemeinsamen Saugzentrale reduziert vorteilhaft die Teileanzahl der Vorrichtung und damit den Montageaufwand vor Ort.

Zur automatisierten oder teilautomatisierten Steuerung kann die erfindungsgemäße Vorrichtung nach einer weiteren Ausführungsform zumindest eine elektronische Steuerungseinrichtung aufweisen, die mit zumindest zwei Vorrichtungskomponenten aus der Gruppe verbunden ist, die die Fräsvorrichtung, die Materialweiche und die Saugvorrichtung aufweist. D. h., dass die Steuerung mit der Fräsvorrichtung und der Materialweiche, oder mit der Fräsvorrichtung und der Saugvorrichtung, oder mit allen dreien verbunden ist. Auf diese Weise können Funktionen gekoppelt werden, sodass z. B. bei Änderung der Frästiefe an der Fräsvorrichtung die Materialweiche zum Umschalten zwischen den Auslässen angesteuert wird, und/oder mit Aktivierung der Fräsvorrichtung die Saugvorrichtung angeschaltet wird. Ferner ist eine Funktion denkbar, bei der ungenutzte Auslässe der Materialweiche identifiziert werden, um ein Umschalten auf die ungenutzten Auslässe zu blockieren.

Nach noch einer weiteren Ausführungsform der erfindungsgemäßen Vorrichtung weist diese eine Hubvorrichtung mit einem Träger auf. Dabei hat die Fräsvorrichtung eine Führung, die an dem Träger geführt bewegbar angeordnet ist, der bevorzugt auf einer verfahrbaren Basis angeordnet ist. Bei vertikaler Ausrichtung des Trägers erleichtert eine solche Hubvorrichtung einem Bediener das bahnweise Abfräsen der Materialschichten in vertikaler Richtung von einer Wandfläche als Baustoffoberfläche.

Mit einer horizontalen Ausrichtung des Trägers ist eine solche Hubvorrichtung zum bahnweisen Abfräsen der Materialschichten in horizontaler Richtung von einer Boden- oder Deckenfläche vorgesehen und kann auch als Schubvorrichtung bezeichnet werden.

Die Hubvorrichtung (oder Schubvorrichtung) kann gemäß einer weiteren Ausführungsform der erfindungsgemäßen Vorrichtung ebenfalls mit der elektronischen Steuerungseinrichtung (oder mit mehreren) verbunden sein. Dann ist es möglich, dass auch die Fräsbewegung der Fräsvorrichtung entlang des Trägers durch entsprechende Antriebe der Führung am Träger und der Hubvorrichtung elektronisch gesteuert werden kann. Ggf. ist durch Ergänzung der Vorrichtung mit entsprechender Sensorik zur Positionsbestimmung auch eine weitere (Teil-)Automatisierung denkbar. Weitere Automatisierungsmöglichkeiten entstehen bei Verwendung von Detektoren zur Erfassung der einzelnen Schichtdicken und der Materialien zum Beispiel für eine automatische Einstellung der Frästiefe.

Das erfindungsgemäße Verfahren zum Abtrennen und Fraktionieren von Materialien von Baustoffen, die mehrere Schichten unterschiedlicher Materialien aufweisen, wird unter Verwendung einer ebenfalls erfindungsgemäßen Vorrichtung durchgeführt umfasst die Schritte:
i) Ermitteln eines Materials und einer Dicke jeder der Schichten des Baustoffes und Definieren von Fraktionen für jedes der unterschiedlichen Materialien, wobei in Bezug auf die mehreren Schichten ein erstes Material der Schichten des Baustoffes einer ersten Fraktion und das zumindest eine weitere Material einer weiteren Fraktion zugeordnet werden,
ii) Bereitstellen der Vorrichtung, wobei die Vorrichtung,
   - zumindest eine Anzahl Auffangvorrichtungen aufweist, die der ermittelten Anzahl an unterschiedlichen Fraktionen entspricht,
   - eine Materialweiche mit einer Anzahl Auslässe hat, die zumindest der Anzahl der unterschiedlichen Fraktionen entspricht, wobei die erste Fraktion einer ersten Auffangvorrichtung zugeordnet wird, die mit einem ersten Auslass der Materialweiche verbunden ist, und jede weitere Fraktion jeweils einer weiteren Auffangvorrichtung zugeordnet wird, die jeweils mit einem weiteren Auslass der Materialweiche verbunden ist,
iii) Festlegen einer ersten Frästiefe in Abhängigkeit der Dicke der ersten Materialschicht, und Festlegen zumindest einer weiteren Frästiefe in Abhängigkeit der Dicke der zumindest einen weiteren Materialschicht,
iv) Einstellen der Materialweiche mit dem Schwenkelement zur Verbindung des Einlasses mit dem ersten Auslass,
v) Einstellen der ersten Frästiefe an der Fräsvorrichtung und mit der Fräsvorrichtung Abtragen des Materials der ersten Schicht, dabei Absaugen des abgetragenen Materials mit der Saugvorrichtung und Überführen in die erste Auffangvorrichtung und dabei Erhalten der ersten Fraktion,
vi) Umschalten des Schwenkelements der Materialweiche zum Verbinden des Einlasses mit dem weiteren Auslass, der mit der weiteren Auffangvorrichtung zum Auffangen einer weiteren Fraktion verbunden ist,
vii) Einstellen der weiteren Frästiefe an der Fräsvorrichtung und mit der Fräsvorrichtung Abtragen des Materials der weiteren Schicht, dabei Absaugen des abgetragenen Materials mit der Saugvorrichtung und Überführen in die weitere Auffangvorrichtung, dabei Erhalten der weiteren Fraktion.

Natürlich kann auch zuerst das Bereitstellen der Vorrichtung erfolgen, und danach das Ermitteln von Material und Dicke der Schichten des Baustoffes.

Nach einer weiteren Ausführungsform des erfindungsgemäßen Verfahrens werden die Schritte vi) und vii) zum Abtrennen weiterer Schichten des Materials des Baustoffes wiederholt; dabei erfolgt in Schritt vi) das Umschalten des Schwenkelements der Materialweiche zur Verbindung des Einlasses mit dem entsprechenden Auslass derart, dass eine Fraktionierung der abgetrennten Materialien erfolgt, so dass jede Fraktion in die ihr zugedachte Auffangvorrichtung überführt wird.

Nach einer noch weiteren Ausführungsform des erfindungsgemäßen Verfahrens erfolgt vor jedem Umschalten des Schwenkelements der Materialweiche in Schritt vi) durch einen Schritt viii) das Säubern des mit der Fräsvorrichtung verbundenen Röhrenelements und der Materialweiche durch Absaugen mittels der Saugvorrichtung ohne Fräsbetrieb der Fräsvorrichtung.

Weitere Ausführungsformen der Vorrichtung und des Verfahrens sowie einige der Vorteile, die mit diesen und weiteren der jeweiligen Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- Fig. 1: eine schematische Ansicht einer erfindungsgemäßen Vorrichtung zum Fraktionieren von Materialien von Baustoffen, die mehrere Schichten unterschiedlicher Materialien aufweisen,
- Fig. 2: ein Blockbild der mit einer Steuerungsvorrichtung verbindbaren Vorrichtungskomponenten,
- Fig. 3: ein Ablaufschema eines erfindungsgemäßen Verfahrens.

Die Erfindung bezieht sich auf eine Vorrichtung und ein Verfahren zum Abtrennen und Fraktionieren von unterschiedlichen Materialien, die auf Baustoffen oder Baustoffoberflächen in mehreren Schichten vorliegen und dient damit der Gewinnung von Sekundärbaustoffen beispielsweise aus eingebautem Zustand in Innenräumen an Wand-, Decken- und Bodenflächen und an Außenflächen von Gebäuden und Bauwerken. Dabei können gleichzeitig mit einer einzigen Vorrichtung die Baustoffoberflächen von unterschiedlichen Materialien bzw. Beschichtungen befreit und die abgetragenen Materialien selektiv getrennt und aufgefangen werden.

So wird einerseits der von den Materialien bzw. Beschichtungen befreite Baustoff (z. B. Beton, Bimsstein, Porenbeton oder Mauerwerk) sortenrein und damit wiederverwendbar erhalten. Andererseits können die abgetragenen Beschichtungsmaterialen wie Bekleidungen (z. B. Tapeten, Farbanstrichen oder andere Beschichtungen), Putze oder Spachtelmassen als sortenreine, verwertbare Fraktionen erhalten werden, wobei schadstoffhaltige Schichten (z. B. Asbest- oder andere Mineralfasern, Blei, PCBs, PAKs oder PFAs enthaltende Schichten) in einer Schadstofffraktion (oder ggf. mehreren Schadstofffraktionen) aussortiert und gesammelt werden können, um entsprechend den geltenden Bestimmungen entsorgt zu werden.

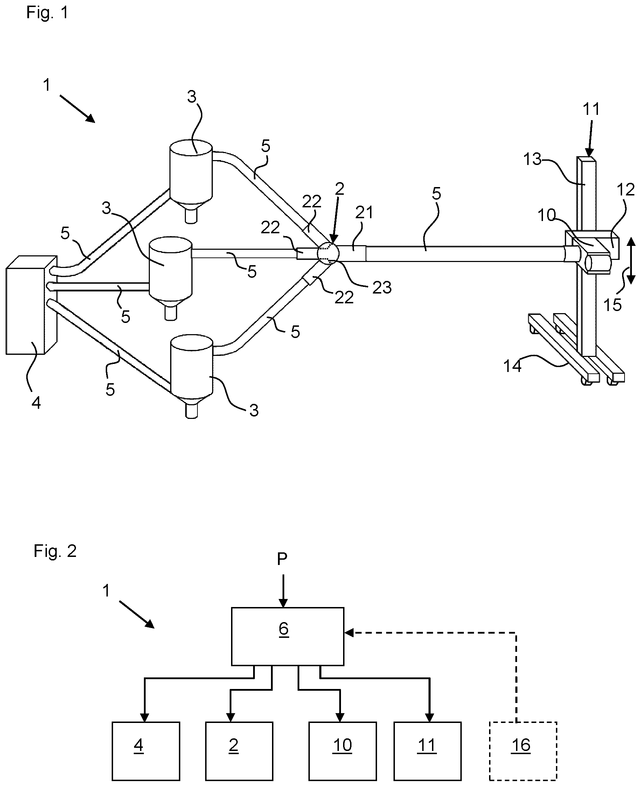

Die in Fig. 1 gezeigte Vorrichtung 1 zum Fraktionieren von Materialien von Baustoffen, die mehrere Schichten unterschiedlicher Materialien aufweisen, umfasst eine Fräsvorrichtung 10, deren Frästiefe verstellbar ist, um Materialschichten unterschiedlicher Dicke von einer Wand-, Decken- oder Bodenfläche abfräsen zu können. Vorteilhaft ist, wenn sich die Frästiefe der Fräsvorrichtung 10 stufenlos zur genauen Anpassung an die jeweilige Schichtdicke einstellen lässt. Das kann manuell geschehen oder elektronisch, um eine ganz eine exakte Einstellung zu erhalten oder auch, um die Einstellung automatisiert vorzunehmen.

Die Fräsvorrichtung 10 ist hier mit einer Wandfräse ausgeführt, die mittels einer Führung 12 an dem vertikalen Träger 13 einer Hubvorrichtung 11 entlang der Hubrichtung 15 geführt auf und ab bewegt werden kann. Die Höhe des Trägers 13 kann an die Höhe der Wand angepasst werden, um die Fräsvorrichtung 10 bahnweise über die gesamte Wandhöhe bewegen zu können. Zur horizontalen Bewegung der Fräsvorrichtung 10 entlang der Wandbreite ist der Träger 13 auf einer verfahrbaren Basis 14 angeordnet.

Die Fräsvorrichtung 10 selbst wird hier nicht näher beschrieben, da jede Fräsvorrichtung mit verstellbarer Frästiefe und einem Fräswalzengehäuse, das einen Sauganschluss zur Verbindung mit einem flexiblen Röhrenelement wie einem Schlauch aufweist, in der erfindungsgemäßen Vorrichtung eingesetzt werden könnte und solche Fräsvorrichtungen bekannt sind. Daher sind das Gehäuse und der Sauganschluss der Fräsvorrichtung 10 in Fig. 1 nicht gesondert bezeichnet.

Über das an einem solchen Sauganschluss angeschlossenen Röhrenelement 5 ist die Fräsvorrichtung 10 mit dem Einlass 21 einer Materialweiche 2 verbunden, die hier drei Auslässe 22 aufweist. Die Materialweiche 2 hat ein Schwenkelement 23 (gepunktet angedeutet), mit dem der Einlass 21 selektiv mit jeweils einem der Auslässe 22 verbunden werden kann. Jeder Auslass 22 ist über ein Röhrenelement 5 mit jeweils einer Auffangvorrichtung 3 verbunden, die wiederum über weitere Röhrenelemente 5 an eine Saugvorrichtung 4 angeschlossen sind. Unter Saugwirkung der Saugvorrichtung 4 wird beim Fräsbetrieb der Fräsvorrichtung 10 das abgetragene Material durch die Materialweiche 2 selektiv in eine der hier gezeigten drei Auffangvorrichtungen 3 gelenkt - selbstverständlich können auch mehr als drei Auffangvorrichtungen 3 eingesetzt werden, etwa 4 oder 5 - ab einer gewissen Größe ist wird die Geometrie der Anlage und der Raumbedarf dann nicht geschickt.

Als flexible Röhrenelemente 5 können beispielsweise Schläuche verwendet werden, die als Saugschläuche ausgebildet sind, um mit der Saugvorrichtung 4 Luft in das Fräswalzengehäuse zu ziehen, die das abgetragene Material, das in aller Regel partikulär sein wird, mitreißt und durch die Röhrenelemente 5 und die Materialweiche 2 in die jeweils ausgewählte Auffangvorrichtung 3 befördert. Ausreichende Flexibilität ist dabei vor allem bei dem mit der Fräsvorrichtung 10 verbundenen Röhrenelement 5 empfohlen, um den Bewegungen der Fräsvorrichtung 10 folgen zu können. Bei den anderen Röhrenelementen 5, die die Materialweiche 2 mit den Auffangvorrichtungen 3 und diese mit der Saugvorrichtung 4 verbinden, erleichtert die Flexibilität der Röhrenelemente 5 den Aufbau der gesamten Vorrichtung 1 vor Ort. Dabei ist es möglich, durch entsprechende Wahl der Länge der Röhrenelemente 5 die Auffangvorrichtungen 3 und die Saugvorrichtung 4 mit einer gewissen Entfernung zur Fräsvorrichtung aufzustellen, sodass kein Ausschleusen aus dem Bearbeitungsbereich für die in den Auffangvorrichtungen 3 abgefüllten Partikel notwendig ist und der weitere Weg zum Abtransport möglichst kurz gehalten werden kann.

Weiter sind Modifikationen der erfindungsgemäßen Vorrichtung 1 möglich, die figurativ nicht dargestellt sind. So können die Fräsvorrichtung, die Materialweiche, insbesondere die Anzahl der Auslässe und die Anzahl der Auffangvorrichtungen sowie die Gestaltung der Saugvorrichtung anders als in Figur 1 gezeigt gestaltet werden. Eine alternative Fräsvorrichtung kann beispielsweise als Decken- oder Bodenfräse mit einer entsprechend modifizierten Träger-Führungseinheit einer Schubvorrichtung zur horizontalen Bewegung der Fräsvorrichtung über die Decke oder den Boden ausgeführt sein. Eine weitere Möglichkeit besteht in der Verwendung einer Handfräse als Fräsvorrichtung einer erfindungsgemäßen Vorrichtung, die ohne entsprechende Hub- bzw. Schubvorrichtungen rein manuell betätigt und geführt wird.

In der erfindungsgemäßen Vorrichtung einsetzbare Materialweichen 2 können sich insbesondere hinsichtlich der Anzahl der Auslässe 22 unterscheiden, die sich nach der Anzahl der vorgesehenen Auffangvorrichtungen 3 richtet. Die Anzahl der Auffangvorrichtungen 3 ist dabei von der Anzahl und Art der Schichten an abzutragendem Material abhängig. Weitere Modifikationen der Materialweiche 2 können sich auf das Schwenkelement 23 zum Umschalten zwischen den Auslässen 22 beziehen: So kann eine Stellvorrichtung (nicht abgebildet) der Materialweiche 2 zur manuellen Betätigung ausgebildet sein, um das Schwenkelement 23 per Handbetätigung zwischen den Auslässen 22 umzuschalten. Alternativ dazu kann die Stellvorrichtung der Materialweiche elektronisch steuerbar sein, um das Schwenkelement 23 in die jeweilige Position zur Verbindung des Einlasses mit einem der Auslässe zu bewegen. Eine weitere Möglichkeit besteht in einer Kombination beider Varianten, wobei sich die Stellvorrichtung sowohl manuell als auch elektronisch gesteuert bewegen lässt.

Ferner ist es möglich, dass die sich einsetzbaren Materialweichen hinsichtlich des Schwenkelements unterscheiden können. Beispielsweise kann das Schwenkelement als ein flexibles Rohrelement ausgeführt sein, dessen eines Ende an den Einlass 21 der Materialweiche 2 anschließt oder ggf. den Einlass 21 bildet. Das andere Ende dieses Rohrelements kann zwischen verschiedenen Positionen verschwenkt werden, in denen das schwenkbare Rohrende an einem jeweiligen Auslass 22 anschließen kann. Ein dazu alternatives Schwenkelement kann beispielsweise ein Verschlussmodul sein, das selektiv jeweils einen der Auslässe offen lässt und die weiteren Auslässe verschließt.

Die Saugvorrichtung 4 der Vorrichtung 1 kann, wie in Fig. 1 dargestellt, durch eine Saugzentrale 4 realisiert sein, an die alle von den Auffangvorrichtungen 3 kommenden Röhrenelemente 5 gemeinsam angeschlossen sind. Bei mehr als drei Auffangbehältern 3 kann es ggf. sinnvoll sein, zwei oder mehr Saugzentralen 4 als Saugvorrichtung einzusetzen, an die jeweils zwei oder mehr Röhrenelemente von den Auffangvorrichtungen 3 kommend angeschlossen werden. Alternativ kann die Saugvorrichtung durch Einzelsaugvorrichtungen gebildet werden, die über das jeweilige Röhrenelement mit jeweils einer der Auffangvorrichtungen verbunden sind.

Beispielsweise können Vakuumsaugvorrichtung eingesetzt werden, die mit einem oder mehreren Seitenkanalverdichtern und H14-Filter, z. B. HEPA-Filter, ausgestattet sind. Ein geeigneter Seitenkanalverdichter kann zum Beispiel einen maximalen Luftstrom von 500 bis 600 m³/h bei einer Leistung von 5 bis 8 kW pro Seitenkanalverdichter mit einem Unterdruck von 335 mbar erzielen. Zur Aufstellung der Vorrichtung vor Ort kann das Gehäuse der Saugvorrichtung feststellbare Rollen oder einen anderen verfahrbaren Träger aufweisen.

Als Auffangvorrichtungen 3 können bevorzugt Filter-Abfüllanlagen zum Einsatz kommen, die das Filtern, Sammeln und Abfüllen von entsprechenden Partikelmengen in geeignete Gebinde wie z. B. Säcke, von kleinen Bändchengewebesäcken bis zu Bigbags, Fässer oder Container, etc. ermöglichen. Dabei sollten die in die Auffangvorrichtung integrierten Filter, die die Lebensdauer der HEPA-Filter in der Saugvorrichtung um ein Vielfaches erhöhen, einen Betrieb ohne Saugkraftverlust zumindest über den Zeitraum zur Füllung eines Gebindes gewähren. Als Filter können z. B. H13/H14-Filter integriert sein, die vorzugsweise pneumatisch abgereinigt werden können, was manuell oder automatisch erfolgen kann. Ferner kann die Auffangvorrichtung einen verfahrbaren Träger aufweisen, um die Aufstellung der Vorrichtung vor Ort zu erleichtern.

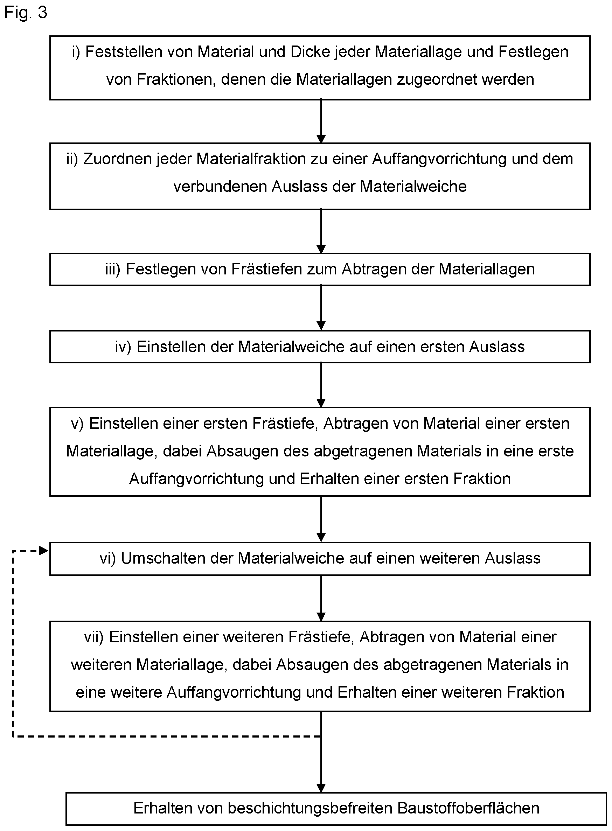

Mit der erfindungsgemäßen Vorrichtung 1 zum Abtrennen mehrlagiger Beschichtungen aus unterschiedlichen Materialien von Baustoffoberflächen kann das Verfahren durchgeführt werden, dessen Ablauf in Fig. 3 dargestellt ist. Eine mehrere Schichten unterschiedlicher Materialien, also quasi eine "mehrlagige Beschichtung" umfasst zumindest zwei Materialschichten, wobei unter der ersten Schicht die oberste, bzw. äußerste, freiliegende verstanden wird, die die Sichtoberfläche des zu bearbeitenden Baustoffes, also etwa der Wand-, Boden- oder Deckenfläche bildet und zuerst abgetragen werden soll. Die zweite, bzw. jede weitere Schicht liegt unter der ersten, aber nicht zwingend benachbart zu der ersten Schicht, und soll in einem zweiten oder weiteren Fräsvorgang abgetragen werden.

Das Verfahren beginnt in Schritt i) mit dem Ermitteln der Materialien und Dicken jeder der Schichten des Baustoffes und Definieren von Fraktionen für jedes der unterschiedlichen Materialien. Damit werden in Abhängigkeit der Recyclingfähigkeit des jeweiligen Materials Fraktionen festgelegt, denen die einzelnen Materiallagen zugeordnet sind. Hierbei wird die erste Materiallage einer ersten Fraktion zugeordnet, und die zweite bzw. jede weitere Materiallage einer zweiten bzw. weiteren Fraktion.

Im nächsten Schritt ii) wird die Vorrichtung 1 mit einer Anzahl Auffangvorrichtungen 3 und einer Materialweiche 2 mit einer Anzahl Auslässen 22 bereitgestellt, die der Anzahl der festgelegten Fraktionen entspricht. Grundsätzlich kann natürlich auch zuerst die Vorrichtung 1 aufgestellt werden. Dann wird die erste Fraktion einer ersten Auffangvorrichtung 3 zugeordnet, die mit einem ersten Auslass 22 der Materialweiche 2 verbunden ist. Jede weitere Fraktion wird jeweils einer weiteren Auffangvorrichtung 3 zugeordnet, die jeweils mit einem weiteren Auslass 22 der Materialweiche 2 verbunden ist.

Zeitlich unabhängig von Schritt ii), d. h. gleichzeitig mit Schritt ii) oder davor oder danach, erfolgt in Schritt iii) das Festlegen der ersten Frästiefe P in Abhängigkeit der Dicke der ersten Materiallage. Dies bedeutet, dass - je nach Recyclingfähigkeit der ersten und der direkt darunter liegenden Materiallagen, die erste Frästiefe der Dicke der ersten Materialschicht entspricht, wenn beide Materiallagen getrennt recyclingfähig sind. Wenn nur die erste Materiallage recyclingfähig ist und die direkt darunter liegende nicht, sondern ggf. schadstoffhaltig ist, kann die erste Frästiefe P etwas kleiner als die Dicke der ersten Materiallage gewählt werden, sodass sichergestellt ist, dass in die erste Fraktion ausschließlich unbelastetes Material der ersten Materialschicht gelangt. Ist umgekehrt die erste Materialschicht nicht recyclingfähig, die zweite aber schon, kann die erste Frästiefe etwas größer als die Dicke der ersten Materialschicht festgelegt werden, um sicherzustellen, dass kein Material der ersten Materialschicht in die zweite Fraktion gelangt. Ist das Material der ersten und der zweiten Materialschicht derselben Fraktion zugeordnet, kann die erste Frästiefe P entsprechend der summierten Dicke beider Lagen festgelegt werden. Auch hierbei können entsprechende Toleranzen in Abhängigkeit der Recyclingfähigkeit einer weiteren angrenzenden Materialschicht festgelegt werden. Entsprechend können eine oder mehrere weitere Frästiefen P in Abhängigkeit einer Dicke der jeweiligen weiteren Materialschicht festgelegt werden. Folglich müssen sich die erste und die weiteren Frästiefen nicht zwingend unterscheiden, sondern hängen nur von den Schichtdicken der jeweiligen Materialschichten und der Recyclingfähigkeit der zugeordneten Fraktion ab.

Vor Abtrennung der ersten Materiallage wird die Saugvorrichtung 4 aktiviert, und in Schritt iv) wird die Materialweiche 2 mit dem Schwenkelement 23 zur Verbindung des Einlasses 21 mit dem ersten Auslass 22 eingestellt, sodass die Fräsvorrichtung 10 mit der ersten Auffangvorrichtung 10 verbunden ist, die der ersten Fraktion zugeordnet ist.

Es folgt in Schritt v) nach dem Einstellen der ersten Frästiefe an der Fräsvorrichtung 10 das Abtragen von Material der ersten Schicht mit der Fräsvorrichtung 10. Dabei wird das abgetragene Material, das in aller Regel partikulär vorliegen wird, mit der Saugvorrichtung 4 in die erste Auffangvorrichtung 3 gefördert und die erste Fraktion erhalten, die die Materialpartikel der ersten Materiallage aufweist.

Zur Abtrennung und Fraktionierung einer weiteren Schicht erfolgt in Schritt vi) das Umschalten der Materialweiche 2, sodass das Schwenkelement 23 den Einlass 21 mit demjenigen Auslass 22 verbindet, der mit einer weiteren Auffangvorrichtung 3 verbunden ist, der die weitere Materiallage zugeordnet ist.

Analog zu Schritt v) wird in Schritt vii) die weitere Frästiefe an der Fräsvorrichtung 10 eingestellt, und mit der Fräsvorrichtung 10 werden die Materialpartikeln der weiteren Materiallage abgetragen und mittels der Saugvorrichtung 4 in die weitere Auffangvorrichtung 3 abgesaugt. So wird in der weiteren Auffangvorrichtung die zugeordnete weitere Fraktion erhalten, die die Materialpartikel der weiteren Materialschicht aufweisen.

Wie in Fig. 3 durch den gestrichelten Pfeil angedeutet, werden zum Abtrennen weiterer Materialschichten, die weiteren Fraktionen zugeordnet sind, die Schritte vi) und vii) wiederholt, bis alle Materiallagen selektiv abgetrennt sind und die bearbeitete Baustoffoberfläche beschichtungsfrei erhalten wird.

Fig. 3 zeigt den Säuberungsschritt viii) nicht, der vor jedem Umschalten der Materialweiche 2 in einem Schritt vi) erfolgen kann. Dabei wird die Saugvorrichtung 4 nach erfolgter Abtragung einer Materiallage auch ohne Fräsbetrieb der Fräsvorrichtung betrieben, um restliche Materialpartikel aus der Fräsvorrichtung 10, der Materialweiche 2 und den verbundenen Röhrenelementen 5 abzusaugen und in die jeweils verbundene Auffangvorrichtung 10 zu überführen. Für diesen Nachlaufbetrieb der Saugvorrichtung kann eine bestimmte Zeitdauer festgelegt sein.

Grundsätzlich ist es möglich, dass die erfindungsgemäße Vorrichtung 1 rein manuell bedient und gesteuert wird. D. h., dass das Einstellen der Frästiefe, Einstellen der Materialweiche, Aktivieren der Saugvorrichtung und der Fräsvorrichtung und das bahnenweise Führen der Fräsvorrichtung entlang der Wand-, Boden- oder Deckenfläche händisch durch einen Anwender erfolgt, letzteres ggf. passiv unterstützt durch eine Hub- oder Schubvorrichtung. Vorteilhaft ist es aber auch möglich, einige oder alle dieser Schritte elektrisch zu steuern und ggf. sogar zu automatisieren.

Dazu ist in Fig. 2 eine Konfiguration der Vorrichtung 1 mit einer Steuerungseinrichtung 6 angedeutet, die mit allen elektronisch steuerbaren Komponenten der Vorrichtung 1, hier mit der Saugvorrichtung 4, der Materialweiche 2, der Fräsvorrichtung 10 und der Hubvorrichtung 11 kommuniziert und eine Automatisierung ermöglicht. Der Einfachheit halber ist hier eine einzige Steuerungseinrichtung 6 dargestellt, es sind aber auch mehrere Steuerungseinrichtungen denkbar, die miteinander kommunizieren, um die beschriebenen Funktionen auszuführen.

Die jeweiligen Steuerungsparameter P werden mittels einer Eingabeschnittstelle in die Steuerungseinrichtung 6 eingegeben, die entsprechend programmiert ist, das Verfahren mit der Vorrichtung 1 auszuführen. Die Steuerungsparameter P umfassen beispielsweise die Frästiefen für jede sukzessiv abzutragende Materialschicht mit einer zugeordneten Weichenstellung der Materialweiche, sodass das Einstellen der Frästiefe automatisch mit der Umschaltung der Materialweiche zur Verbindung der Fräsvorrichtung mit einer vorbestimmten Auffangvorrichtung verbunden ist. Weitere Steuerungsparameter P können den Betrieb der Saugvorrichtung mit der Fräsvorrichtung 10 koppeln, sodass die Saugvorrichtung 4 bei Anschalten der Fräsvorrichtung 10 automatisch aktiviert wird. Auch die Nachlaufdauer der Saugvorrichtung 4 zum Säubern der Komponenten kann in den Steuerungsparametern P festgelegt werden. Zum vollautomatisierten Betrieb ist eine programmierbare oder sensorgesteuerte Hubvorrichtung 11 denkbar, die mit entsprechenden Aktoren ausgestattet ist, um die Fräsvorrichtung 10 mit der Führung 12 am Träger 13 vertikal und mit der verfahrbaren Basis 14 horizontal bahnenweise entlang der zu bearbeitenden Fläche zu bewegen.

Eine Sensorsteuerung ist in Fig. 2 mit der gestrichelt dargestellten Sensorik 16 angedeutet, die mit der Steuerungseinrichtung 6 zur Eingabe der gemessenen Parameter kommuniziert. Im Fall der Hubvorrichtung 11 kann es sich dabei beispielsweise um Lage- und Bewegungsparameter handeln. Ferner ist es denkbar, dass die Sensorik 16 einen oder mehrere Schichtdickendetektoren aufweisen kann, um Anzahl, Dicke und ggf. Material der Materialschichten zu detektieren. Mit entsprechend hinterlegten Datenbanken ist es dann auch möglich, dass die Zuordnung der Materialschichten zu bestimmten Fraktionen und die Festlegung der Frästiefen automatisch erfolgt, verbunden mit der entsprechenden Zuordnung zu einer jeweiligen Auffangvorrichtung und der entsprechenden Stellung der Materialweiche.

Selbstverständlich sind auch Teilautomatisierungen der Vorrichtung 1 denkbar, wobei abweichend zu Fig. 2 nicht alle Vorrichtungskomponenten elektronisch gesteuert werden, sodass nicht alle der vorbeschriebenen Funktionen automatisch ausgeführt werden können. Eine vorteilhafte Teilautomatisierung kann insbesondere die Kopplung der Fräsvorrichtung mit der Materialweiche und der Saugvorrichtung vorsehen.

Im Folgenden werden einige Anwendungsbeispiele zur Illustrierung des Verfahrens in Bezug auf die Vorrichtung 1 aus Fig. 1 beschrieben.

Die Fräsvorrichtung 10 wird mit der Hubvorrichtung 11 an einer zu bearbeitenden Wandfläche (nicht abgebildet) aufgestellt, die mit mehreren Materialschichten beschichtet ist. Die Fräsvorrichtung 10 wird mittels eines Saugschlauchs (Röhrenelement) 5 mit der Materialweiche 2 verbunden, die die zuvor festgelegten Fraktionen selektiv in die jeweilige Auffangvorrichtung 3 leitet. Pro Fraktion wird eine separate Auffangvorrichtung 3 genutzt. Die Saugvorrichtung 4 kann von der Fräsvorrichtung 10 entfernt platziert werden, da bis zu 100 m Saugschlauch angeschlossen werden können.

Zunächst werden die zu selektierenden und die recyclingfähigen Materialien der mehrlagigen Beschichtung festgestellt und bestimmten Fraktionen zugeordnet. Je nach Material erlauben diese Fraktionen unterschiedlich starke "Verunreinigungen" durch Fremdstoffe, um als recyclingfähig zu gelten. Dies wird bei der Planung berücksichtigt, wenn festgelegt wird, mit welcher Frästiefe in welchen Schritten die Materialschichten abgefräst werden sollen.

Erstes Beispiel zur selektiven Abtrennung einer mehrlagigen Beschichtung von einer Betonoberfläche:
Zunächst werden die Materialien und Dicken der Materialschichten festgestellt, die auf der Betonoberfläche aufgebracht sind (Schritt i).

**Tabelle 1 zeigt Materialien und Dicken der Materialschichten**

| Erste Materialschicht | Zweite Materialschicht | Dritte Materialschicht | Baustoff |
|---|---|---|---|
| Farbanstrich | Spachtelmasse | Gips-Putz | Beton |
| 1 mm | 1 mm | 30 mm | 100 mm |

In der weiteren Planung wird festgelegt, dass Gips-Putz und Beton zum Recycling sortenrein erhalten werden sollen, Farbanstrich und Spachtelmasse können zusammengefasst und als eine Fraktion zur Entsorgung entfernt werden. Damit werden Farbanstrich und Spachtelmasse, d. h. die ersten beiden Materialschichten, einer ersten Fraktion und der Gips-Putz (die dritte Materialschicht) einer zweiten Fraktion zur Abtrennung von der Betonoberfläche zugeordnet (Schritt ii).

Beim Aufbau der Fräsvorrichtung 10 an der zu bearbeitenden beschichteten Betonfläche wird daher die Vorrichtung 1 mit zwei Auffangvorrichtungen 3 ausgestatten, die jeweils mit einem Ausgang 22 der Materialweiche 2 verbunden sind. Der dritte Ausgang 22 der Materialweiche 2 in Fig. 1 bleibt hierbei ungenutzt. Alternativ könnte in diesem Beispiel eine Materialweiche 2 mit nur zwei Ausgängen 22 eingesetzt werden.

Zum Abtrennen der ersten Fraktion wird eine erste Frästiefe zu 3 mm bestimmt, um zusätzlich zu dem Farbanstrich und der Spachtelmasse (erste und zweite Materialschicht) eine 1 mm Schicht des Gips-Putzes (dritte Materialschicht) zu entfernen, sodass sichergestellt ist, dass keine Spachtelmasse in der verbleibenden Gips-Putzschicht enthalten ist.

Eine zweite Frästiefe wird auf 30 mm festgelegt, um die verbleibende Gips-Putzschicht (dritte Materialschicht) vollständig von der Betonoberfläche zu entfernen. Da somit die zweite Frästiefe der ursprünglich festgestellten Dicke der Gips-Putzschicht entspricht und folglich ca. 1 mm größer als die Dicke der nach dem ersten Fräsvorgang verbleibenden Gips-Putzschicht, wird die Fräswalze im zweiten Fräsvorgang auch Kontakt mit dem Beton haben und somit auch sicher Putzanhaftungen von der Betonoberfläche entfernen. Dadurch, dass Beton härter als Gips-Putz ist, findet dabei kein nennenswerter Abtrag des Betons statt. (Schritt iii)

Nachdem an der Fräsvorrichtung 10 die erste Frästiefe mit 3 mm eingestellt, über die Materialweiche 2 die Verbindung der Fräsvorrichtung 10 mit einer ersten Auffangvorrichtung hergestellt (Schritt iv) und die Saugvorrichtung 4 aktiviert worden ist, wird die Wand Bahn für Bahn, z. B. von oben nach unten abgefräst. Dabei wird das abgetragene Farb- und Spachtelmaterial in der ersten Auffangvorrichtung 3 als erste Fraktion aufgefangen (Schritt v), die hier zur Entsorgung vorgesehen ist.

Nach Abtrennung der ersten beiden Materialschichten über die gesamte Wandfläche wird die Saugvorrichtung 4 bei gleicher Weichenstellung und ohne zu fräsen für 30 Sekunden laufen lassen (Schritt viii), um mögliche Anhaftungen in den Schläuchen (Röhrenelementen) abzusaugen.

Dann wird die zweite Frästiefe mit 30 mm eingestellt und die Materialweiche 2 auf die nächste Auffangvorrichtung 3 umgestellt (Schritte vi, vii), um erneut Bahn für Bahn die Wandfläche abzufräsen und das dabei abgetragene Gips-Putzmaterial unter Saugwirkung der Saugvorrichtung 4 in der nächsten Auffangvorrichtung 3 als zweite Fraktion aufzufangen.

Die Betonwand und das Gips-Putzmaterial werden sortenrein erhalten und können recycelt zu werden.

Zweites Beispiel zur selektiven Abtrennung einer mehrlagigen Beschichtung von einer Ziegeloberfläche:
Zunächst werden die Materialien und Dicken der Materialschichten ermittelt, die auf der Betonoberfläche aufgebracht sind (Schritt i).

**Tabelle 2 zeigt Materialien und Dicken der Materialschichten**

| Erste Materialschicht | Zweite Materialschicht | Dritte Materialschicht | Baustoff |
|---|---|---|---|
| Farbanstrich | Tapete | Gips-Putz | Ziegelmauerwerk |
| 1 mm | 1 mm | 30 mm | 100 mm |

Die Tabelle 2 zeigt lediglich beispielhaft eine Schichtanordnung, die mit einem Farbanstrich von 1 mm, einer Tapetenschicht von 1 mm, einer Gips-Putz-Schicht von 30 mm und einem Ziegelmauerwerk mit einer Dicke von 100 mm angegeben ist. Es ist ergänzend zu erwähnen, dass übliche Nennwerte für die Dicke von Ziegelmauerwerk bei 115 mm, 175 mm oder 240 mm sind. Die tatsächliche Dicke jeder Schicht aus diesem Beispiel spielt für das Verständnis des Fachmanns von der Erfindung keine Rolle.

In diesem Beispiel sollen Gips-Putz und Ziegel sortenrein recycelt werden, sodass eine Vermischung dieser beiden Materialien vermieden werden muss. Farbanstrich und Tapete werden zusammengefasst und als eine Fraktion entfernt. Damit werden Farbanstrich und Tapete, d. h. die ersten beiden Materialschichten, einer ersten Fraktion und der Gips-Putz (die dritte Materialschicht) einer zweiten Fraktion zur Abtrennung von der Ziegeloberfläche zugeordnet (Schritt ii).

Da eine an die Ziegeloberfläche angrenzende Randschicht des Gips-Putzes durch Interaktion mit den Ziegeln rot gefärbt ist, und daher nicht für das klassische Gipsrecycling verwendbar ist, darf diese Randschicht nicht in die zweite Fraktion gelangen. Daher wird diese Randschicht mit dem Mischmaterial aus Gips und Ziegelstein - je nach Entsorgungsvorgaben - der ersten Fraktion zugeordnet, wenn eine gemeinsame Entsorgung möglich ist, oder einer dritten Fraktion zugeordnet, wenn die Farb- und Tapetenfraktion getrennt von der Gips-Ziegel-Mischfraktion entsorgt werden muss (auch Schritt ii).

Folglich wird beim Aufbau der Fräsvorrichtung 10 an der zu bearbeitenden beschichteten Ziegelfläche die Vorrichtung 1 je nach Entsorgungsvorgaben mit zwei oder drei Auffangvorrichtungen 3 ausgestattet, die jeweils mit einem Ausgang 22 der Materialweiche 2 verbunden sind.

Zum Abtrennen der ersten Fraktion wird eine erste Frästiefe zu 3 mm bestimmt, um zusätzlich zu dem Farbanstrich und der Spachtelmasse (erste und zweite Materialschicht) eine 1 mm Schicht des Gips-Putzes (dritte Materialschicht) zu entfernen, sodass sichergestellt ist, dass keine Spachtelmasse in der verbleibenden Gips-Putzschicht enthalten ist.

Eine zweite Frästiefe wird hier auf 25 mm festgelegt, sodass ein Großteil des Gips-Putzes abgetrennt wird, jedoch ein ausreichender Abstand zu der Ziegeloberfläche verbleibt und damit sichergestellt ist, dass die an die Ziegeloberfläche angrenzende, verfärbte Randschicht nicht in die zweite Fraktion gelangt.

Für einen dritten Fräsvorgang wird eine dritte Frästiefe zu 3 mm bestimmt, um den restlichen Putz mit der verfärbten Randschicht von den Ziegelsteinen zu entfernen. (Schritt iii)

Der erste Fräsvorgang wird mit der ersten Frästiefe von 3 mm durchgeführt, sodass das Farb- und Tapetenmaterial bahnweise gemeinsam abgetragen wird und unter Saugwirkung der Saugvorrichtung 4 über die Materialweiche 2 in eine erste Auffangvorrichtung 3 befördert wird. So wird die erste Fraktion erhalten (Schritte iv, v), die hier zur Entsorgung vorgesehen ist.

Zur Reinigung von Rückständen wird die Saugvorrichtung 4 bei gleicher Weichenstellung und ohne zu fräsen für 30 Sekunden vor Durchführung des zweiten Fräsvorgangs laufen lassen (Schritt viii).

Dann wird die zweite Frästiefe mit 25 mm eingestellt und die Materialweiche 2 auf die zweite Auffangvorrichtung 3 umgestellt (Schritte vi, vii), um erneut Bahn für Bahn die Wandfläche abzufräsen und das dabei abgetragene Gips-Putzmaterial unter Saugwirkung der Saugvorrichtung 4 in der zweiten Auffangvorrichtung 3 als zweite Fraktion aufzufangen.

Auch hiernach kann zum Absaugen von anhaftenden Gips-Partikeln die Saugvorrichtung 4 bei gleicher Weichenstellung und ohne zu fräsen für 30 Sekunden vor Durchführung des dritte Fräsvorgangs laufen gelassen werden (Schritt viii).

Da in diesem Fall die dritte Fraktion ebenfalls zur Entsorgung vorgesehen ist, kann hier der Reinigungsschritt ggf. entfallen.

Für den dritten Fräsvorgang wird die dritte Frästiefe auf 3 mm eingestellt und die Materialweiche 2 - je nach Entsorgungsvorgaben - auf die erste Auffangvorrichtung oder eine nächste Auffangvorrichtung 3 umgestellt (Schritte vi, vii), um das restliche Gips-Putzmaterial mit der verfärbten Randschicht bahnweise von der Ziegeloberfläche abzufräsen und unter Saugwirkung der Saugvorrichtung 4 in der jeweiligen Auffangvorrichtung 3 aufzufangen.

Damit wird - je nach Entsorgungsvorgaben - das restliche Gips-Putzmaterial mit der verfärbten Randschicht entweder zusammen mit dem Farb- und Tapetenmaterial als erste Fraktion zur gemeinsamen Entsorgung aufgefangen oder getrennt als dritte Fraktion erhalten, die separat zu der ersten Fraktion zu entsorgen ist.

Das Ziegelmauerwerk und ein Großteil des Gips-Putzmaterials werden sortenrein erhalten und können recycelt zu werden.

Ein Einsatzgebiet der erfindungsgemäßen Vorrichtung und des Verfahrens erstreckt sich dabei nicht nur auf Renovierungs- oder Sanierungsmaßnahmen von Altbauten, sondern auch auf das Urban Mining zur Gewinnung von Sekundärrohstoffen, die je nach Zusammensetzung bzw. Bauweise für gleiche oder andere Bauzwecke genutzt werden können.

Vor allem mineralische Baustoffe wie Gips, Zement, Beton und Ziegel können sortenrein gut wiederverwendet werden, da durch die erfindungsgemäße selektive Abtrennung der einzelnen Materialschichten schadstoffhaltige Schichten wie Asbest oder andere Mineralfasern, asbesthaltige Spachtelmassen oder Fliesenkleber, PCBs, PAKs, PFAS, etc. sicher ausgeschleust und entsorgt werden können, um Rückstände im Recyclingmaterial zu verhindern.

### BEZUGSZEICHENLISTE

- 1: Vorrichtung zum selektiven Abtrennen mehrlagiger Beschichtungen
- 2: Materialweiche
- 3: Auffangvorrichtung (Abscheider-/Filter-/Abfüllvorrichtung)
- 4: Saugvorrichtung
- 5: Röhrenelement
- 6: Steuereinrichtung
- 10: Fräsvorrichtung
- 11: Hubvorrichtung
- 12: Führung
- 13: Träger
- 14: Basis
- 15: Hubrichtung
- 16: Sensorik
- 21: Einlass
- 22: Auslass
- 23: Schwenkelement
- P: Bearbeitungsparameter/Frästiefe

## Patentansprüche

1. Vorrichtung (1) zum Abtrennen und Fraktionieren von Materialien von Baustoffen, die mehrere Schichten unterschiedlicher Materialien aufweisen, mit einer Fräsvorrichtung (10) mit verstellbarer Frästiefe, einer Auffangvorrichtung (3), einer Saugvorrichtung (4) und einer Mehrzahl flexibler Röhrenelemente (5), durch die die Fräsvorrichtung (10) mit der Auffangvorrichtung (3) und der Saugvorrichtung (4) verbunden ist,
**dadurch gekennzeichnet, dass**
die Vorrichtung (1) zumindest eine weitere Auffangvorrichtung (3) und eine Materialweiche (2) mit einem Einlass (21) und zumindest zwei Auslässen (22) aufweist, wobei der Einlass (21) mit der Fräsvorrichtung (10) über ein Röhrenelement (5) verbunden ist und durch ein Schwenkelement (23) selektiv mit jeweils einem der Auslässe (22) in Verbindung bringbar ist, und
wobei jeder Auslass (22) über jeweils ein Röhrenelement (5) mit jeweils einer der zumindest zwei Auffangvorrichtungen (3) verbunden ist, und jede Auffangvorrichtung (3) über ein Röhrenelement (5) mit der Saugvorrichtung (4) verbunden ist.

2. Vorrichtung (1) nach Anspruch 1,
**dadurch gekennzeichnet, dass**
die Frästiefe der Fräsvorrichtung (10) stufenlos und/oder elektronisch einstellbar ist.

3. Vorrichtung (1) nach Anspruch 1 oder 2,
**dadurch gekennzeichnet, dass**
die Materialweiche (2) zum Umschalten des Schwenkelements (23) zwischen den zumindest zwei Auslässen (22) eine manuelle und/oder elektronisch steuerbare Stellvorrichtung aufweist.

4. Vorrichtung (1) nach zumindest einem der Ansprüche 1 bis 3,
**dadurch gekennzeichnet, dass**
die Saugvorrichtung (4) durch eine gemeinsame Saugzentrale (4) oder durch zumindest zwei Einzelsaugvorrichtungen gebildet wird, mit denen die zumindest zwei Auffangvorrichtungen (3) über das jeweilige Röhrenelement (5) verbunden sind.

5. Vorrichtung (1) nach zumindest einem der Ansprüche 1 bis 4,
**dadurch gekennzeichnet, dass**
die Vorrichtung (1) zumindest eine elektronische Steuerungseinrichtung (6) aufweist, die mit zumindest zwei Vorrichtungskomponenten aus der Gruppe verbunden ist, die die Fräsvorrichtung (10), die Materialweiche (2) und die Saugvorrichtung (4) aufweist.

6. Vorrichtung (1) nach zumindest einem der Ansprüche 1 bis 5,
**dadurch gekennzeichnet, dass** die Vorrichtung (1) eine Hubvorrichtung (11) mit einem Träger (13) aufweist, wobei die Fräsvorrichtung (10) eine Führung (12) aufweist, die an dem Träger (13) geführt bewegbar angeordnet ist, der bevorzugt auf einer verfahrbaren Basis (14) angeordnet ist.

7. Vorrichtung (1) nach Anspruch 6,
**dadurch gekennzeichnet, dass**
die Hubvorrichtung (11) mit der zumindest einen elektronischen Steuerungseinrichtung (6) verbunden ist.

8. Verfahren zum Abtrennen und Fraktionieren von Materialien von Baustoffen, die mehrere Schichten unterschiedlicher Materialien aufweisen, unter Verwendung einer Vorrichtung (1) nach zumindest einem der Ansprüche 1 bis 7,
umfassend die Schritte
i) Ermitteln eines Materials und einer Dicke jeder der Schichten des Baustoffes und Definieren von Fraktionen für jedes der unterschiedlichen Materialien, wobei in Bezug auf die mehreren Schichten ein erstes Material der Schichten des Baustoffes einer ersten Fraktion und das zumindest eine weitere Material einer weiteren Fraktion zugeordnet werden,
ii) Bereitstellen der Vorrichtung (1), wobei die Vorrichtung (1)
- zumindest eine Anzahl Auffangvorrichtungen (3) aufweist, die der ermittelten Anzahl an unterschiedlichen Fraktionen entspricht,
- eine Materialweiche (2) mit einer Anzahl Auslässe (22) hat, die zumindest der Anzahl der unterschiedlichen Fraktionen entspricht, wobei die erste Fraktion einer ersten Auffangvorrichtung (3) zugeordnet wird, die mit einem ersten Auslass (22) der Materialweiche (2) verbunden ist, und jede weitere Fraktion jeweils einer weiteren Auffangvorrichtung (3) zugeordnet wird, die jeweils mit einem weiteren Auslass (22) der Materialweiche (2) verbunden ist,
iii) Festlegen einer ersten Frästiefe (P) in Abhängigkeit der Dicke der ersten Materialschicht, und Festlegen zumindest einer weiteren Frästiefe (P) in Abhängigkeit der Dicke der zumindest einen weiteren Materialschicht,
iv) Einstellen der Materialweiche (2) mit dem Schwenkelement (23) zur Verbindung des Einlasses (21) mit dem ersten Auslass (22),
v) Einstellen der ersten Frästiefe an der Fräsvorrichtung (10) und mit der Fräsvorrichtung (10) Abtragen des Materials der ersten Schicht, dabei Absaugen des abgetragenen Materials mit der Saugvorrichtung (4) und Überführen in die erste Auffangvorrichtung (3) und dabei Erhalten der ersten Fraktion,
vi) Umschalten des Schwenkelements (23) der Materialweiche (2) zum Verbinden des Einlasses (21) mit dem weiteren Auslass (22), der mit der weiteren Auffangvorrichtung (3) zum Auffangen einer weiteren Fraktion verbunden ist,
vii) Einstellen der weiteren Frästiefe (P) an der Fräsvorrichtung (10) und mit der Fräsvorrichtung (10) Abtragen des Materials der weiteren Schicht, dabei Absaugen des abgetragenen Materials mit der Saugvorrichtung (4) und Überführen in die weitere Auffangvorrichtung (3), dabei Erhalten der weiteren Fraktion.

9. Verfahren nach Anspruch 8,
das die Schritte umfasst:
- Wiederholen der Schritte vi) und vii) zum Abtrennen weiterer Schichten des Materials des Baustoffes, dabei in Schritt vi) Umschalten des Schwenkelements (23) der Materialweiche (2) zur Verbindung des Einlasses (21) mit dem entsprechenden Auslass (22) derart, dass eine Fraktionierung der abgetrennten Materialien erfolgt.

10. Verfahren nach Anspruch 8 oder 9,
das die Schritte umfasst:
- vor Schritt vi), Umschalten des Schwenkelements (23) der Materialweiche (2), Durchführen des Schrittes
viii) - Säubern des mit der Fräsvorrichtung (10) verbundenen Röhrenelements (5) und der Materialweiche (2) durch Absaugen mittels der Saugvorrichtung (4) ohne Fräsbetrieb der Fräsvorrichtung (10).
